# EUROPEAN PATENT SPECIFICATION

(11) **EP 3 885 039 B1**
(45) Date of publication and mention of the grant of the patent: **31.07.2024**
(21) Application number: 20842661.9
(22) Date of filing: 15.04.2020
(51) Int. Cl.: B01J 23/83, B01J 27/20, B01J 21/18, B01J 27/24, C02F 1/72, C02F 101/38, B01J 37/10, B01J 37/34, B01J 37/08

(54) **GRAPHITE-LIKE CARBON NITRIDE DOPED MODIFIED MICROSPHERE CATALYST, AND PREPARATION METHOD THEREFOR AND APPLICATION THEREOF**
GRAPHITÄHNLICHER, MIT KOHLENSTOFFNITRID DOTIERTER MODIFIZIERTER MIKROSPHÄRENKATALYSATOR, VERFAHREN ZU SEINER HERSTELLUNG UND SEINE VERWENDUNG
CATALYSEUR À MICROSPHÈRES MODIFIÉES DOPÉES AU NITRURE DE CARBONE DE TYPE GRAPHITE, SON PROCÉDÉ DE PRÉPARATION ET SON APPLICATION

(30) Priority: 06.01.2020 CN 202010008380
(43) Date of publication of application: 29.09.2021
(73) Proprietor: Southeast University, Nanjing City, Jiangsu 210096 (CN)
(72) Inventor: WU, Min, Nanjing Jiangsu 210096 (CN); WANG, Chuanchuan, Nanjing Jiangsu 210096 (CN); LI, Zhihao, Nanjing Jiangsu 210096 (CN); LIU, Ying, Nanjing Jiangsu 210096 (CN); ZHENG, Yingping, Nanjing Jiangsu 210096 (CN); JIN, Liuwei, Nanjing Jiangsu 210096 (CN)
(74) Representative: Lanchava, Bakuri
(86) International application number: PCT/CN2020/084905
(87) International publication number: WO 2021/139023

(56) References cited:
- CN-A- 104 646 045
- CN-A- 104 707 643
- CN-A- 106 243 388
- CN-A- 106 243 388
- CN-A- 107 199 045
- CN-A- 107 601 776
- US-A- 4 203 835
- HAN SANCAN ET AL: "Constructing the Band Alignment of Graphitic Carbon Nitride (g-C3N4 )/Copper(I) Oxide (Cu2O) Composites by Adjusting the Contact Facet for Superior Photocatalytic Activity", ACS APPLIED ENERGY MATERIALS, vol. 2, no. 3, 24 December 2018 (2018-12-24), pages 1803 - 1811, XP055964437, ISSN: 2574-0962, DOI: 10.1021/acsaem.8b01930
- DATABASE WPI Week 201781, Derwent World Patents Index; AN 2017-764835, XP002807597
- DATABASE WPI Week 201987, Derwent World Patents Index; AN 2019-88893X, XP002807598

## Description

### Technical Field

The present invention relates to a catalyst, a preparation method and a use thereof, in particular to a graphite-like carbon nitride-doped modified micro-spherical catalyst, a preparation method and a use thereof, and belongs to the field of petrochemical wastewater treatment.

### Background Art

Graphite-phase carbon nitride (g-C₃N₄) has the characteristics of high stability, high hardness, high thermal conductivity and wide energy gap (forbidden band), thus has excellent properties of wear resistance and acid and alkali resistance. It is a new type of semiconductor catalyst without metal elements, is non-toxic and pollution-free, and has good stability in solvents, especially in aqueous solvents, therefore has wide application prospects. However, there is a problem of small specific surface area when g-C₃N₄ is used as a catalyst carrier.

Acrylonitrile, as an important chemical raw material, is widely applied in manufacturing of acrylic fibers, nitrile butadiene rubber, ABS (acrylonitrile butadiene styrene) industrial plastics and synthetic resins, etc. However, acrylonitrile is highly toxic. Acrylonitrile is not only poisonous in vapor state, but also easily causes poisoning through skin when it adheres to the skin. Inhalation of acrylonitrile vapor for a long time may cause nausea, vomiting, headache, fatigue and discomfort, and even death in severe cases. Therefore, it is necessary to treat the acrylonitrile wastewater.

At present, all acrylonitrile is produced through a propylene ammoxidation process, and the wastewater from acrylonitrile production mainly contains toxic and harmful substances such as acrylonitrile, acetonitrile, propionitrile, cyanomethacrylate, acrylaldehyde, and a large amount of refractory oligomers. At present, most domestic acrylonitrile production enterprises mainly use biochemical processes related with activated sludge treatment to treat acrylonitrile wastewater, but the treatment effect is not satisfactory. When the inlet chemical oxygen demand (COD) is 1,400 mg/L~1,700 mg/L, the outlet COD is above 400 mg·L⁻¹, which can't meet the wastewater discharge standard of 50 mg·L⁻¹ or lower in the petrochemical industry. Some domestic acrylonitrile production enterprises use an activated carbon adsorption process for advanced treatment of acrylonitrile wastewater, but the consumption of activated carbon is very large in actual operation, the adsorbent has to be replaced frequently, and the treatment cost is high. Besides, the high toxicity of acrylonitrile limits the application of membrane treatment, activated carbon adsorption and biological treatment; other methods such as photocatalysis, plasma and ozone co-treatment, etc. have low treatment efficiency and cannot meet the industrial demand; electrochemical treatment method produces many by-products, and the produced sediment, sludge and solid wastes have to be treated later, causing increased treatment costs. The Fenton process is an effective advanced oxidation technique, and is applicable to advanced treatment of wastewater. However, with regard to Fenton process, the utilization ratio of hydrogen peroxide is not high, the working procedures are long, and the resultant iron sludge results in secondary pollution.

The prior art document HAN SANCAN ET AL: "Constructing the Band Alignment of Graphitic Carbon Nitride (g-C3N4)/Copper(I) Oxide (Cu2O) Composites by Adjusting the Contact Facet for Superior Photocatalytic Activity", ACS APPLIED ENERGY MATERIALS, vol. 2, no. 3, 24 December 2018 (2018-12-24), pages 1803-1811, XP055964437, ISSN: 2574-0962 describes a composite catalyst which comprises copper(I) oxide on graphitic carbon nitride for using as photocatalyst in the oxidative degradation of rhodamine B in water under UV irradiation. CN 107 308 972 A describes a preparation method and application of glutamic acid-modified g-C3N4-Cu2O composite catalyst for water-treatment technology field. CN 110 354 885 A describes a preparation method of neodymium trioxide-doped carbon nitride and its application as photocatalyst.

### Contents of the Invention

**Object of the Invention:** A first object of the present invention is to provide a graphite-like carbon nitride-doped modified micro-spherical catalyst that has high catalytic efficiency and large specific surface area, and is reusable and free of secondary pollution; a second object of the present invention is to provide a preparation method of the catalyst, and a third object of the present invention is to provide a use of the catalyst in degradation of acrylonitrile wastewater.

**Technical Solution:** In the graphite-like carbon nitride-doped modified micro-spherical catalyst provided by the present invention, the active components of the catalyst are CuO and Nd₂O₃, and the carrier of the catalyst is g-C₃N₄.

Furthermore, the molar ratio of CuO, Nd₂O₃ and g-C₃N₄ is 1:0.25-1:4-40.

The preparation method of the graphite-like carbon nitride-doped modified micro-spherical catalyst, according to the present invention, comprises the following steps:
(1) dissolving copper nitrate and neodymium nitrate in water while stirring, adding dicyandiamide, a template agent and an auxiliary agent sequentially, and performing ultrasonic treatment to form a mixed solution;
(2) subjecting the mixed solution to a hydrothermal reaction, cooling, washing and drying to obtain a precursor powder; and
(3) calcining and grinding the precursor powder.

Furthermore, the molar ratio of the mixture of copper nitrate and neodymium nitrate to dicyandiamide in the step (1) is 1:2-20.

Furthermore, the template agent in the step (1) is any one of sucrose, glucose or activated carbon; the molar ratio of the mixture of copper nitrate and neodymium nitrate to the template agent is 1:20-30.

Furthermore, the auxiliary agent in the step (1) is any one of ethanediol, propanetriol, sodium dodecyl benzene sulfonate or hexadecyl trimethyl ammonium bromide; the molar ratio of the mixture of copper nitrate and neodymium nitrate to the auxiliary agent is 1:2-10.

Furthermore, the reaction temperature of the hydrothermal reaction in the step (2) is 180-220 °C, and the reaction time is 18-24h.

Preferably, the hydrothermal reaction in the step (2) is carried out in a stainless steel reactor.

Furthermore, the preparation method of the graphite-like carbon nitride-doped modified micro-spherical catalyst is characterized in that, the speed of the calcination process in the step (3) is 2-5 °C/minute, the calcination temperature is 500-550 °C, and the calcination time is 3-4 h.

The use of the graphite-like carbon nitride-doped modified micro-spherical catalyst according to the present invention in the degradation of acrylonitrile wastewater comprises the following steps:
mixing the graphite-like carbon nitride-doped modified micro-spherical catalyst with acrylonitrile wastewater and hydrogen peroxide and making the mixture to react for 2-6 h at 160-200 °C in a pressure vessel.

Furthermore, the mass ratio of the graphite-like carbon nitride-doped modified micro-spherical catalyst to acrylonitrile to hydrogen peroxide is 1:0.1:2-6.

Preferably, the pressure vessel is a pressure reactor.

Preferably, the mass concentration of hydrogen peroxide is 27.5 %.

**Benefits:** Compared with the prior art, the present invention has the following prominent advantages:
Compared with the traditional graphite-phase carbon nitride, the catalyst provided by the present invention has greater specific surface area and achieves more extensive solid-liquid contact and a more thorough degradation effect; different from the previous Fenton oxidation method, the preparation method provided by the present invention doesn't not produce iron sludge and has no secondary pollution; the catalyst can be formed easily, can be reused for many times, and has good industrial prospects; the preparation method of the catalyst provided in the present invention is simple in operation and has high feasibility.

With regard to the use of the catalyst provided by the present invention, in a pressure reactor, hydrogen peroxide is catalyzed by the catalyst to decompose to produce hydroxyl radicals, so that the chemical bonds of organic pollutants are broken, the consumption of hydrogen peroxide is greatly reduced, and the catalyst is safe and efficient; especially, for high-concentration acrylonitrile wastewater that is difficult to degrade, the use of the catalyst can effectively solve the problem of incomplete degradation of such wastewater at present.

### Description of Drawings

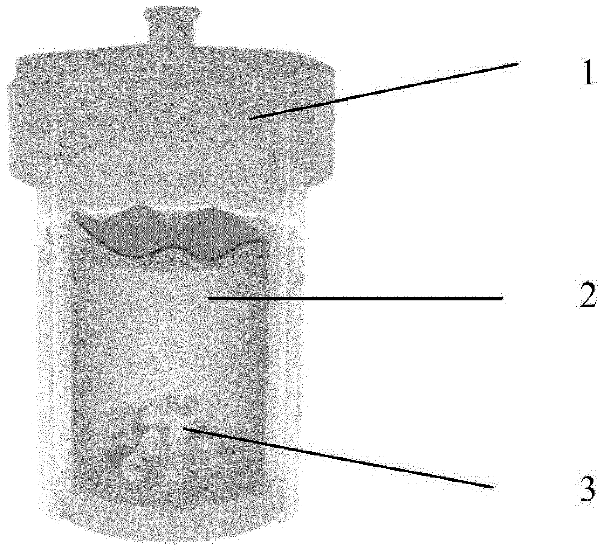

Fig. 1 is a schematic diagram of the pressure reactor according to the present invention.

### Embodiments

Hereunder the technical solution of the present invention will be further described in combination with the examples.

### Example 1

(1) 1 mmol copper nitrate and 1 mmol neodymium nitrate are dissolved in 70 mL deionized water while stirring to form a uniform solution. Then, 4 mmol dicyandiamide and 40 mmol sucrose are added, then 4 mmol ethanediol is added, and the obtained mixture is ultrasonically treated for 30 minutes and continuously stirred for 30 minutes;
(2) The homogeneous solution is transferred to a 100 mL stainless steel autoclave with polytetrafluoroethylene (PTFE) lining and is heated at 200 °C for 20 h. After the solution is naturally cooled to room temperature, the suspension is centrifuged, washed for three times with deionized water and absolute ethanol, and dried overnight in air;
(3) The product prepared above is transferred into a covered alumina crucible, then is heated to 550 °C in a muffle furnace at a heating rate of 2 °C/minute and is held at the temperature for 3 h. After naturally cooling to room temperature, the catalyst is ground into powder in an agate mortar and the powder is collected to obtain a catalyst CuO/Nd₂O₃@g-C₃N₄-1, wherein the molar ratio of CuO to Nd₂O₃ to g-C₃N₄ is 1:0.5:4.

In Fig. 1, reference number 1 represents a pilot-scale pressure reactor, reference number 2 represents acrylonitrile wastewater and hydrogen peroxide, and reference number 3 represents the graphite-like carbon nitride-doped modified micro-spherical catalyst. The catalyst CuO/Nd₂O₃@g-C₃N₄-1 is loaded into a 1 L pressure reactor, acrylonitrile wastewater with 1,500 mg/L COD and 27.5 % hydrogen peroxide are added into the pressure reactor, and the mass ratio of the catalyst to acrylonitrile to 27.5 % hydrogen peroxide is 1:0.1:2. After the pressure reactor is sealed, it is put into a system at 200 °Cfor 3 h reaction. The COD concentration in the reaction system is measured, and the result indicates that the COD removal rate is 87 %. No secondary pollution of sludge and ions is produced, and the reuse rate of the catalyst is high in the process.

### Example 2

(1) 1 mmol copper nitrate and 1 mmol neodymium nitrate are dissolved in 70 mL deionized water while stirring to form a uniform solution. Then, 8 mmol dicyandiamide and 40 mmol sucrose are added, then 4 mmol ethanediol is added, and the obtained mixture is ultrasonically treated for 30 minutes and continuously stirred for 30 minutes;
(2) The homogeneous solution is transferred to a 100 mL stainless steel autoclave with PTFE lining and is heated at 180 °C for 18 h. After the solution is naturally cooled to room temperature, the suspension is centrifuged, washed for three times with deionized water and absolute ethanol, and dried overnight in air;
(3) The product prepared above is transferred into a covered alumina crucible, then is heated to 500 °C in a muffle furnace at a heating rate of 2 °C/minute and is held at the temperature for 3.5h. After naturally cooling to room temperature, the catalyst is ground into powder in an agate mortar and the powder is collected to obtain a catalyst CuO/Nd₂O₃@g-C₃N₄-2, wherein, the molar ratio of CuO to Nd₂O₃ to g-C₃N₄ is 1:0.5:8.

The catalyst CuO/Nd₂O₃@g-C₃N₄-2 is loaded into a 1 L pressure reactor, acrylonitrile wastewater with 1,500 mg/L COD and 27.5 % hydrogen peroxide are added into the reactor, and the mass ratio of the catalyst to acrylonitrile to 27.5% hydrogen peroxide is 1:0.1:2. After the pressure reactor is sealed, it is put into a system at 160 °C for 2 h reaction. The COD concentration in the reaction system is measured, and the result indicates that the COD removal rate is 86 %. No secondary pollution of sludge and ions is produced, and the reuse rate of the catalyst is high in the process.

### Example 3

(1) 1 mmol copper nitrate and 2 mmol neodymium nitrate are dissolved in 70 mL deionized water while stirring to form a uniform solution. Then, 40 mmol dicyandiamide and 50 mmol glucose are added, then 10 mmol propanetriol is added, and the obtained mixture is ultrasonically treated for 30 minutes and continuously stirred for 30 minutes;
(2) The homogeneous solution is transferred to a 100 mL stainless steel autoclave with PTFE lining, and is heated at 220 °C for 24 h. After the solution is naturally cooled to room temperature, the suspension is centrifuged, washed for three times with deionized water and absolute ethanol, and dried overnight in air;
(3) The product prepared above is transferred into a covered alumina crucible, then is heated to 530 °C in a muffle furnace at a heating rate of 5 °C/minute and is held at the temperature for 4h. After naturally cooling to room temperature, the catalyst is ground into powder in an agate mortar and the powder is collected to obtain a catalyst CuO/Nd₂O₃@g-C₃N₄-3, wherein, the molar ratio of CuO to Nd₂O₃ to g-C₃N₄ is 1:1:40.

The catalyst CuO/Nd₂O₃@g-C₃N₄-3 is loaded into a 1 L pressure reactor, acrylonitrile wastewater with 1,500mg/L COD and 27.5% hydrogen peroxide are added into the reactor, and the mass ratio of the catalyst to acrylonitrile to 27.5% hydrogen peroxide is 1:0.1:5. After the pressure reactor is sealed, it is put into a system at 180 °C for 6 h reaction. The COD concentration in the reaction system is measured, and the result indicates that the COD removal rate is 97 %. No secondary pollution of sludge and ions is produced, and the reuse rate of the catalyst is high in the process.

### Example 4

(1) 1 mmol copper nitrate and 0.5 mmol neodymium nitrate are dissolved in 70mL deionized water while stirring to form a uniform solution. Then, 4 mmol dicyandiamide and 50 mmol activated carbon are added, then 10 mmol sodium dodecyl benzene sulfonate is added, and the obtained mixture is ultrasonically treated for 30 minutes and continuously stirred for 30 minutes;
(2) The homogeneous solution is transferred to a 100 mL stainless steel autoclave with PTFE lining and is heated at 200 °C for 20 h. After the solution is naturally cooled to room temperature, the suspension is centrifuged, washed for three times with deionized water and absolute ethanol, and dried overnight in air;
(3) The product prepared above is transferred into a covered alumina crucible, then is heated to 550 °C in a muffle furnace at a heating rate of 3 °C/minute and is held at the temperature for 3 h. After naturally cooling to room temperature, the catalyst is ground into powder in an agate mortar and the powder is collected to obtain a catalyst CuO/Nd₂O₃@g-C₃N₄-4, wherein the molar ratio of CuO to Nd₂O₃ to g-C₃N₄ is 1:0.25:4.

The catalyst CuO/Nd₂O₃@g-C₃N₄-4 is loaded into a 1 L pressure reactor, acrylonitrile wastewater with 1,500mg/L COD and 27.5% hydrogen peroxide are added into the reactor, and the mass ratio of the catalyst to acrylonitrile to 27.5% hydrogen peroxide is 1:0.1:5. After the pressure reactor is sealed, it is put into a system at 200 °Cfor 3 h reaction. The COD concentration in the reaction system is measured, and the result indicates that the COD removal rate is 92 %. No secondary pollution of sludge and ions is produced, and the reuse rate of the catalyst is high in the process.

### Example 5

(1) 0.5 mmol copper nitrate and 1 mmol neodymium nitrate are dissolved in 70 mL deionized water while stirring to form a uniform solution. Then, 4 mmol dicyandiamide and 60 mmol sucrose are added, then 20 mmol hexadecyl trimethyl ammonium bromide is added, and the obtained mixture is ultrasonically treated for 30 minutes and continuously stirred for 30 minutes;
(2) The homogeneous solution is transferred to a 100 mL stainless steel autoclave with PTFE lining, and is heated at 200 °C for 20 h. After the solution is naturally cooled to room temperature, the suspension is centrifuged, washed for three times with deionized water and absolute ethanol, and dried overnight in air;
(3) The product prepared above is transferred into a covered alumina crucible, then is heated to 550 °C in a muffle furnace at a heating rate of 2 °C/minute and is held at the temperature for 3h. After naturally cooling to room temperature, the catalyst is ground into powder in an agate mortar and the powder is collected to obtain a catalyst CuO/Nd₂O₃@g-C₃N₄-5, wherein the molar ratio of CuO to Nd₂O₃ to g-C₃N₄ is 1:1:8.

The catalyst CuO/Nd₂O₃@g-C₃N₄-5 is loaded into a 1 L pressure reactor, acrylonitrile wastewater with 1,500 mg/L COD and 27.5 % hydrogen peroxide are added into the reactor, and the mass ratio of the catalyst to acrylonitrile to 27.5 % hydrogen peroxide is 1:0.1:5. After the pressure reactor is sealed, it is put into a system at 200 °C for 3 h reaction. The COD concentration in the reaction system is measured, and the result indicates that the COD removal rate is 88 %. No secondary pollution of sludge and ions is produced, and the reuse rate of the catalyst is high in the process.

### Example 6

(1) 1 mmol copper nitrate and 1 mmol neodymium nitrate are dissolved in 70 mL deionized water while stirring to form a uniform solution. Then, 4 mmol dicyandiamide and 60 mmol sucrose are added, then 20 mmol ethanediol is added, and the obtained mixture is ultrasonically treated for 30 minutes and continuously stirred for 30 minutes;
(2) The homogeneous solution is transferred to a 100 mL stainless steel autoclave with PTFE lining, and is heated at 200 °C for 20 h. After the solution is naturally cooled to room temperature, the suspension is centrifuged, washed for three times with deionized water and absolute ethanol, and dried overnight in air;
(3) The product prepared above is transferred into a covered alumina crucible, then is heated to 550 °C in a muffle furnace at a heating rate of 2 °C/minute and is held at the temperature for 3h. After naturally cooling to room temperature, the catalyst is ground into powder in an agate mortar and the powder is collected to obtain a catalyst CuO/Nd₂O₃@g-C₃N₄-6, wherein, the molar ratio of CuO to Nd₂O₃ to g-C₃N₄ is 1:0.5:4.

The catalyst CuO/Nd₂O₃@g-C₃N₄-6 is loaded into a 1 L pressure reactor, acrylonitrile wastewater with 1,500 mg/L COD and 27.5 % hydrogen peroxide are added into the reactor, and the mass ratio of the catalyst to acrylonitrile to 27.5 % hydrogen peroxide is 1:0.1:6. After the pressure reactor is sealed, it is put into a system at 200 °C for 3 h reaction. The COD concentration in the reaction system is measured, and the result indicates that the COD removal rate is 91 %. No secondary pollution of sludge and ions is produced, and the reuse rate of the catalyst is high in the process.

### Example 7

(1) 1 mmol copper nitrate and 1 mmol neodymium nitrate are dissolved in 70mL deionized water while stirring to form a uniform solution. Then, 40 mmol dicyandiamide and 60 mmol sucrose are added, then 20 mmol ethanediol is added, and the obtained mixture is ultrasonically treated for 30 minutes and continuously stirred for 30 minutes;
(2) The homogeneous solution is transferred to a 100mL stainless steel autoclave with PTFE lining, and is heated at 200 °C for 20 h. After the solution is naturally cooled to room temperature, the suspension is centrifuged, washed for three times with deionized water and absolute ethanol, and dried overnight in air;
(3) The product prepared above is transferred into a covered alumina crucible, then is heated to 550 °C in a muffle furnace at a heating rate of 2 °C/minute and is held at the temperature for 3h. After naturally cooling to room temperature, the catalyst is ground into powder in an agate mortar and the powder is collected to obtain a catalyst CuO/Nd₂O₃@g-C₃N₄-7, wherein, the molar ratio of CuO to Nd₂O₃ to g-C₃N₄ is 1:0.5:40.

The catalyst CuO/Nd₂O₃@g-C₃N₄-7 is loaded into a 1 L pressure reactor, acrylonitrile wastewater with 1,500 mg/L COD and 27.5 % hydrogen peroxide are added into the reactor, and the mass ratio of the catalyst to acrylonitrile to 27.5 % hydrogen peroxide is 1:0.1:6. After the pressure reactor is sealed, it is put into a system at 200 °C for 3 h reaction. The COD concentration in the reaction system is measured, and the result indicates that the COD removal rate is 90 %. No secondary pollution of sludge and ions is produced, and the reuse rate of the catalyst is high in the process.

### Comparative example 1

(1) 2 mmol neodymium nitrate is dissolved in 70 mL deionized water while stirring to form a uniform solution, in which the concentration of neodymium nitrate is 1 mmol. Then, 4 mmol dicyandiamide and 40 mmol sucrose are added, then 4 mmol ethanediol is added, and the obtained mixture is ultrasonically treated for 30 minutes and continuously stirred for 30 minutes;
(2) The homogeneous solution is transferred to a 100 mL stainless steel autoclave with PTFE lining, and is heated at 200 °C for 20 h. After the solution is naturally cooled to room temperature, the suspension is centrifuged, washed for three times with deionized water and absolute ethanol, and dried overnight in air;
(3) The product prepared above is transferred into a covered alumina crucible, then is heated to 550 °C in a muffle furnace at a heating rate of 2 °C/minute and is held at the temperature for 3 h. After naturally cooling to room temperature, the catalyst is ground into powder in an agate mortar and the powder is collected to obtain a catalyst Nd₂O₃@g-C₃N₄, wherein, the molar ratio of Nd₂O₃ to g-C₃N₄ is 1:4.

The catalyst Nd₂O₃@g-C₃N₄ is loaded into a 1 L pressure reactor, acrylonitrile wastewater with 1,500 mg/L COD and 27.5 % hydrogen peroxide are added into the reactor, and the mass ratio of the catalyst to acrylonitrile to 27.5 % hydrogen peroxide is 1:0.1:2. After the pressure reactor is sealed, it is put into a system at 200 °C for 3 h reaction. The COD concentration in the reaction system is measured, and the result indicates that the COD removal rate is 68 %. The degradation activity of Nd₂O₃ @ g-C₃N₄ is lower than that of CuO/N_{d}2O₃ @ g-C₃N₄ in the example 1.

### Comparative example 2

(1) 2 mmol copper nitrate is dissolved in 70 mL deionized water while stirring to form a uniform solution, in which the concentration of copper nitrate is 1 mmol. Then, 4 mmol dicyandiamide and 40 mmol sucrose are added, then 4 mmol ethanediol is added, and the obtained mixture is ultrasonically treated for 30 minutes and continuously stirred for 30 minutes;
(2) The homogeneous solution is transferred to a 100 mL stainless steel autoclave with PTFE lining, and is heated at 200 °C for 20 h. After the solution is naturally cooled to room temperature, the suspension is centrifuged, washed for three times with deionized water and absolute ethanol, and dried overnight in air;
(3) The product prepared above is transferred into a covered alumina crucible, then is heated to 550 °C in a muffle furnace at a heating rate of 2 °C/minute and is held at the temperature for 3h. After naturally cooling to room temperature, the catalyst is ground into powder in an agate mortar and the powder is collected to obtain a catalyst CuO@g-C₃N₄, wherein, the molar ratio of CuO to g-C₃N₄ is 1:2.

The catalyst CuO@g-C₃N₄ is loaded into a 1 L pressure reactor, acrylonitrile wastewater with 1,500 mg/L COD and 27.5 % hydrogen peroxide are added into the reactor, and the mass ratio of the catalyst to acrylonitrile to 27.5 % hydrogen peroxide is 1:0.1:2. After the pressure reactor is sealed, it is put into a system at 200 °C for 3 h reaction. The COD concentration in the reaction system is measured, and the result indicates that the COD removal rate is 75 %. The degradation activity of CuO@g-C₃N₄ is lower than that of CuO/Nd₂O₃@g-C₃N₄.

### Comparative example 3

(1) 1 mmol copper nitrate and 1 mmol neodymium nitrate are dissolved in 70 mL deionized water while stirring to form a uniform solution. Then, 80 mmol dicyandiamide and 40 mmol sucrose are added, then 4 mmol ethanediol is added, and the obtained mixture is ultrasonically treated for 30 minutes and continuously stirred for 30 minutes;
(2) The homogeneous solution is transferred to a 100 mL stainless steel autoclave with PTFE lining, and is heated at 200 °C for 20 h. After the solution is naturally cooled to room temperature, the suspension is centrifuged, washed for three times with deionized water and absolute ethanol, and dried overnight in air;
(3) The product prepared above is transferred into a covered alumina crucible, then is heated to 550 °C in a muffle furnace at a heating rate of 2 °C/minute and is held at the temperature for 3 h. After naturally cooling to room temperature, the catalyst is ground into powder in an agate mortar and the powder is collected to obtain a catalyst CuO/Nd₂O₃@g-C₃N₄-8, wherein, the molar ratio of CuO to Nd₂O₃ to g-C₃N₄ is 1:0.5:80.

The catalyst CuO/Nd₂O₃@g-C₃N₄-8 is loaded into a 1 L pressure reactor, acrylonitrile wastewater with 1,500 mg/L COD and 27.5 % hydrogen peroxide are added into the reactor, and the mass ratio of the catalyst to acrylonitrile to 27.5 % hydrogen peroxide is 1:0.1:2. After the pressure reactor is sealed, it is put into a system at 200 °C for 3 h reaction. The COD concentration in the reaction system is measured, and the result indicates that the COD removal rate is 78 %.

### Comparative example 4

(1) 1 mmol copper nitrate and 1 mmol neodymium nitrate are dissolved in 70 mL deionized water while stirring to form a uniform solution. Then, 2 mmol dicyandiamide and 40 mmol sucrose are added, then 4 mmol ethanediol is added, and the obtained mixture is ultrasonically treated for 30 minutes and continuously stirred for 30 minutes;
(2) The homogeneous solution is transferred to a 100 mL stainless steel autoclave with PTFE lining, and is heated at 200 °C for 20 h. After the solution is naturally cooled to room temperature, the suspension is centrifuged, washed for three times with deionized water and absolute ethanol, and dried overnight in air;
(3) The product prepared above is transferred into a covered alumina crucible, then is heated to 550 °C in a muffle furnace at a heating rate of 2 °C/minute and is held at the temperature for 3h. After naturally cooling to room temperature, the catalyst is ground into powder in an agate mortar and the powder is collected to obtain a catalyst CuO/Nd₂O₃@g-C₃N₄-9, wherein, the molar ratio of CuO to Nd₂O₃ to g-C₃N₄ is 1:0.5:2.

The catalyst CuO/Nd₂O₃@g-C₃N₄-9 is loaded into a 1 L pressure reactor, acrylonitrile wastewater with 1,500mg/L COD and 27.5% hydrogen peroxide are added into the reactor, and the mass ratio of the catalyst to acrylonitrile to 27.5% hydrogen peroxide is 1:0.1:2. After the pressure reactor is sealed, it is put into a system at 200°C for 3h reaction. The COD concentration in the reaction system is measured, and the result indicates that the COD removal rate is 72 %. No secondary pollution of sludge and ions is produced, and the reuse rate of the catalyst is high in the process.

### Comparative example 5

(1) 1 mmol copper nitrate and 1 mmol zinc nitrate are dissolved in 70 mL deionized water while stirring to form a uniform solution. Then, 4 mmol dicyandiamide and 40 mmol sucrose are added, then 4 mmol ethanediol is added, and the obtained mixture is ultrasonically treated for 30 minutes and continuously stirred for 30 minutes;
(2) The homogeneous solution is transferred to a 100 mL stainless steel autoclave with PTFE lining, and is heated at 200 °C for 20 h. After the solution is naturally cooled to room temperature, the suspension is centrifuged, washed for three times with deionized water and absolute ethanol, and dried overnight in air;
(3) The product prepared above is transferred into a covered alumina crucible, then is heated to 550 °C in a muffle furnace at a heating rate of 2 °C/minute and is held at the temperature for 3h. After naturally cooling to room temperature, the catalyst is ground into powder in an agate mortar and the powder is collected to obtain a catalyst CuO/ZnO@g-C₃N₄, wherein, the molar ratio of CuO to ZnO to g-C₃N₄ is 1:1:4.

The catalyst CuO/ZnO@g-C₃N₄ is loaded into a 1 L pressure reactor, acrylonitrile wastewater with 1,500 mg/L COD and 27.5 % hydrogen peroxide are added into the reactor, and the mass ratio of the catalyst to acrylonitrile to 27.5 % hydrogen peroxide is 1:0.1:2. After the pressure reactor is sealed, it is put into a system at 200 °C for 3 h reaction. The COD concentration in the reaction system is measured, and the result indicates that the COD removal rate is 82 %. No secondary pollution of sludge and ions is produced, and the reuse rate of the catalyst is high in the process.

### Comparative example 6

(1) 1 mmol ferric nitrate and 1 mmol neodymium nitrate are dissolved in 70mL deionized water while stirring to form a uniform solution. Then, 4 mmol dicyandiamide and 40 mmol sucrose are added, then 4 mmol ethanediol is added, and the obtained mixture is ultrasonically treated for 30 minutes and continuously stirred for 30 minutes;
(2) The homogeneous solution is transferred to a 100 mL stainless steel autoclave with PTFE lining, and is heated at 200 °C for 20 h. After the solution is naturally cooled to room temperature, the suspension is centrifuged, washed for three times with deionized water and absolute ethanol, and dried overnight in air;
(3) The product prepared above is transferred into a covered alumina crucible, then is heated to 550 °C in a muffle furnace at a heating rate of 2 °C/minute and is held at the temperature for 3h. After naturally cooling to room temperature, the catalyst is ground into powder in an agate mortar and the powder is collected to obtain a catalyst Fe/Nd@g-C₃N₄, wherein, the molar ratio of Fe₂O₃ to Nd₂O₃ to g-C₃N₄ is 1:1:4.

The catalyst Fe₂O₃/Nd₂O₃@g-C₃N₄ is loaded into a 1 L pressure reactor, acrylonitrile wastewater with 1,500 mg/L COD and 27.5 % hydrogen peroxide are added into the reactor, and the mass ratio of the catalyst to acrylonitrile to 27.5 % hydrogen peroxide is 1:0.1:2. After the pressure reactor is sealed, it is put into a system at 200 °C for 3 h reaction. The COD concentration in the reaction system is measured, and the result indicates that the COD removal rate is 83 %. No secondary pollution of sludge and ions is produced, and the reuse rate of the catalyst is high in the process.

Through comparison between the comparative example 1 and the examples 1-7, it can be seen that the degradation activity of the catalyst using Nd alone is obviously lower than that of the catalyst using Cu and Nd in combination;

Through comparison between the comparative example 2 and the examples 1-7, it can be seen that the degradation activity of the catalyst using Cu alone is obviously lower than that of the catalyst using Cu and Nd in combination;

Through comparison between the comparative example 3 and the examples 1-7, it can be seen that an excessively high molar ratio of CuO to Nd₂O₃ to g-C₃N₄ leads to a decreased utilization ratio of the carrier and decreased catalytic degradation activity.

Through comparison between the comparative example 4 and the examples 1-7, it can be seen that an excessively low molar ratio of CuO to Nd₂O₃ to g-C₃N₄ leads to incomplete loading of the active components and decreased catalytic degradation activity.

Through comparison between the comparative example 5 and the examples 1-7, it can be seen that the degradation activity of the catalyst using Cu and Zn in combination is lower than that of the catalyst using Cu and Nd in combination;

Through comparison between the comparative example 6 and the examples 1-7, it can be seen that the degradation activity of the catalyst using Fe and Nd in combination is lower than that of the catalyst using Cu and Nd in combination.

## Claims

1. A graphite-like carbon nitride-doped modified micro-spherical catalyst, wherein active components of the catalyst are CuO and Nd₂O₃, and a carrier of the catalyst is g-C₃N₄.

2. The graphite-like carbon nitride-doped modified micro-spherical catalyst according to claim 1, wherein, the molar ratio of CuO to Nd₂O₃ to g-C₃N₄ is 1:0.25-1:4-40.

3. A preparation method of the graphite-like carbon nitride-doped modified micro-spherical catalyst according to claim 1, comprising the following steps:
(1) dissolving copper nitrate and neodymium nitrate in water while stirring, adding dicyandiamide, a template agent and an auxiliary agent sequentially, and performing ultrasonic treatment to form a mixed solution;
(2) subjecting the mixed solution to a hydrothermal reaction, cooling, washing and drying to obtain precursor powder; and
(3) calcining and grinding the precursor powder.

4. The preparation method of the graphite-like carbon nitride-doped modified micro-spherical catalyst according to claim 3, wherein, the molar ratio of the mixture of copper nitrate and neodymium nitrate to dicyandiamide in the step (1) is 1:2-20.

5. The preparation method of the graphite-like carbon nitride-doped modified micro-spherical catalyst according to claim 3, wherein, the template agent in the step (1) is any one of sucrose, glucose or activate carbon; the molar ratio of the mixture of copper nitrate and neodymium nitrate to the template agent is 1:20-30.

6. The preparation method of the graphite-like carbon nitride-doped modified micro-spherical catalyst according to claim 3, wherein the auxiliary agent in the step (1) is any one of ethanediol, propanetriol, sodium dodecyl benzene sulfonate or hexadecyl trimethyl ammonium bromide; the molar ratio of the mixture of copper nitrate and neodymium nitrate to the auxiliary agent is 1:2-10.

7. The preparation method of the graphite-like carbon nitride-doped modified micro-spherical catalyst according to claim 3, wherein, the reaction temperature of the hydrothermal reaction in the step (2) is 180-220 °C, and the reaction time is 18-24 h.

8. The preparation method of the graphite-like carbon nitride-doped modified micro-spherical catalyst according to claim 3, wherein, the speed of the calcination process in the step (3) is 2-5 °C/minute, the calcination temperature is 500-550 °C, and the calcination time is 3-4 h.

9. Use of the graphite-like carbon nitride-doped modified micro-spherical catalyst according to claim 1 in the degradation of acrylonitrile wastewater, comprising the following steps:
mixing the graphite-like carbon nitride-doped modified micro-spherical catalyst with acrylonitrile wastewater and hydrogen peroxide and making the mixture to react for 2-6 h at 160-200 °C in a pressure vessel.

10. The use of the graphite-like carbon nitride-doped modified micro-spherical catalyst in the degradation of acrylonitrile wastewater according to claim 9, wherein, the mass ratio of the graphite-like carbon nitride-doped modified micro-spherical catalyst to acrylonitrile to hydrogen peroxide is 1:0.1:2-6.

## Patentansprüche

1. Mit graphitartigem Kohlenstoffnitrid dotierter modifizierter mikrokugelförmiger Katalysator, wobei die aktiven Komponenten des Katalysators CuO und Nd₂O₃ sind und ein Träger des Katalysators g-C₃N₄ ist.

2. Mit graphitartigem Kohlenstoffnitrid dotierter modifizierter mikrokugelförmiger Katalysator nach Anspruch 1, wobei das molare Verhältnis von CuO zu Nd₂O₃ zu g-C₃N₄ 1:0,25-1:4-40 beträgt.

3. Verfahren zur Herstellung des mit graphitartigem Kohlenstoffnitrid dotierten modifizierten mikrosphärischen Katalysators nach Anspruch 1, umfassend die folgenden Schritte:
(1) Auflösen von Kupfernitrat und Neodymnitrat in Wasser unter Rühren, Zugabe von Dicyandiamid, einem Template-Mittelt und einem Hilfsmittel nacheinander und Durchführung einer Ultraschallbehandlung zur Bildung einer gemischten Lösung;
(2) Unterziehen der gemischten Lösung einer hydrothermalen Reaktion, Abkühlen, Waschen und Trocknen, um ein Vorläuferpulver zu erhalten; und
(3) Kalzinieren und Mahlen des Vorläuferpulvers.

4. Verfahren zur Herstellung des mit graphitartigem Kohlenstoffnitrid dotierten modifizierten mikrokugelförmigen Katalysators nach Anspruch 3, wobei das molare Verhältnis der Mischung aus Kupfernitrat und Neodymnitrat zu Dicyandiamid in Schritt (1) 1:2-20 beträgt.

5. Verfahren zur Herstellung des mit graphitartigem Kohlenstoffnitrid dotierten modifizierten mikrokugelförmigen Katalysators nach Anspruch 3, wobei das Template-Mittel in Schritt (1) eines von Saccharose, Glucose oder Aktivkohle ist; das Molverhältnis der Mischung aus Kupfernitrat und Neodymnitrat zu dem Template-Mittel 1:20-30 beträgt.

6. Verfahren zur Herstellung des mit graphitartigem Kohlenstoffnitrid dotierten modifizierten mikrokugelförmigen Katalysators nach Anspruch 3, wobei das Hilfsmittel in Schritt (1) eines von Ethandiol, Propantriol, Natriumdodecylbenzolsulfonat oder Hexadecyltrimethylammoniumbromid ist; das Molverhältnis der Mischung aus Kupfernitrat und Neodymnitrat zu dem Hilfsmittel 1:2-10 beträgt.

7. Verfahren zur Herstellung des mit graphitartigem Kohlenstoffnitrid dotierten modifizierten mikrokugelförmigen Katalysators nach Anspruch 3, wobei die Reaktionstemperatur der hydrothermalen Reaktion in Schritt (2) 180-220 °C beträgt und die Reaktionszeit 18-24 h beträgt.

8. Verfahren zur Herstellung des mit graphitartigem Kohlenstoffnitrid dotierten modifizierten mikrosphärischen Katalysators nach Anspruch 3, wobei die Geschwindigkeit des Kalzinierungsprozesses in Schritt (3) 2-5 °C/Minute, die Kalzinierungstemperatur 500-550 °C und die Kalzinierungszeit 3-4 h beträgt.

9. Verwendung des mit graphitartigem Kohlenstoffnitrid dotierten modifizierten mikrokugelförmigen Katalysators nach Anspruch 1 zum Abbau von Acrylnitril-Abwasser, umfassend die folgenden Schritte:
Mischen des mit graphitartigem Kohlenstoffnitrid dotierten modifizierten mikrokugelförmigen Katalysators mit Acrylnitrilabwasser und Wasserstoffperoxid und Reagierenlassen des Gemischs für 2-6 Stunden bei 160-200 °C in einem Druckbehälter.

10. Verwendung des mit graphitartigem Kohlenstoffnitrid dotierten modifizierten mikrokugelförmigen Katalysators beim Abbau von Acrylnitril-Abwasser nach Anspruch 9, wobei das Massenverhältnis des mit graphitartigem Kohlenstoffnitrid dotierten modifizierten mikrokugelförmigen Katalysators zu Acrylnitril und Wasserstoffperoxid 1:0,1:2-6 beträgt.

## Revendications

1. Catalyseur microsphérique modifié dopé au nitrure de carbone de type graphite, dans lequel les composants actifs du catalyseur sont CuO et Nd₂O₃ , et un support du catalyseur est g-C₃N₄ .

2. Le catalyseur microsphérique modifié dopé au nitrure de carbone de type graphite selon la revendication 1, dans lequel le rapport molaire entre CuO et Nd₂O₃ et g-C₃N₄ est de 1:0,25-1:4-40.

3. Méthode de préparation du catalyseur microsphérique modifié dopé au nitrure de carbone de type graphite selon la revendication 1, comprenant les étapes suivantes :
(1) dissoudre le nitrate de cuivre et le nitrate de néodyme dans l'eau tout en remuant, ajouter séquentiellement du dicyandiamide, un agent template et un agent auxiliaire, et effectuer un traitement aux ultrasons pour former une solution mélangée ;
(2) soumettre la solution mélangée à une réaction hydrothermique, la refroidir, la laver et la sécher pour obtenir une poudre de précurseur ; et
(3) calcination et broyage de la poudre de précurseur.

4. Méthode de préparation du catalyseur microsphérique modifié dopé au nitrure de carbone de type graphite selon la revendication 3, dans laquelle le rapport molaire du mélange de nitrate de cuivre et de nitrate de néodyme au dicyandiamide dans l'étape (1) est de 1:2-20.

5. Méthode de préparation du catalyseur microsphérique modifié dopé au nitrure de carbone de type graphite selon la revendication 3, dans laquelle l'agent de template dans l'étape (1) est l'un quelconque parmi le saccharose, le glucose ou le carbone activé ; le rapport molaire du mélange de nitrate de cuivre et de nitrate de néodyme à l'agent de template est de 1 :20-30.

6. Procédé de préparation du catalyseur microsphérique modifié dopé au nitrure de carbone de type graphite selon la revendication 3, dans lequel l'agent auxiliaire dans l'étape (1) est l'un quelconque parmi l'éthanediol, le propanetriol, le dodécyl benzène sulfonate de sodium ou le bromure d'hexadécyl triméthyl ammonium; le rapport molaire du mélange de nitrate de cuivre et de nitrate de néodyme à l'agent auxiliaire est de 1 :2-10.

7. Procédé de préparation du catalyseur microsphérique modifié dopé au nitrure de carbone de type graphite selon la revendication 3, dans lequel, la température de réaction de la réaction hydrothermale dans l'étape (2) est de 180-220 °C, et le temps de réaction est de 18-24 h.

8. Procédé de préparation du catalyseur microsphérique modifié dopé au nitrure de carbone de type graphite selon la revendication 3, dans lequel, la vitesse du processus de calcination dans l'étape (3) est de 2-5 °C/minute, la température de calcination est de 500-550 °C, et le temps de calcination est de 3-4 h.

9. Utilisation du catalyseur microsphérique modifié dopé au nitrure de carbone de type graphite selon la revendication 1 dans la dégradation des eaux usées d'acrylonitrile, comprenant les étapes suivantes:
mélanger le catalyseur microsphérique modifié dopé au nitrure de carbone de type graphite avec de l'eau usée d'acrylonitrile et du peroxyde d'hydrogène et faire réagir le mélange pendant 2 à 6 heures à 160-200 °C dans un récipient sous pression.

10. Utilisation du catalyseur microsphérique modifié dopé au nitrure de carbone de type graphite dans la dégradation des eaux usées d'acrylonitrile selon la revendication 9, dans laquelle le rapport de masse entre le catalyseur microsphérique modifié dopé au nitrure de carbone de type graphite, l'acrylonitrile et le peroxyde d'hydrogène est de 1:0,1:2-6.
